(19) Europäisches Patentamt
European Patent Office
Office européen des brevets

(11) **EP 1 916 284 A1**

(12) **EUROPEAN PATENT APPLICATION**
published in accordance with Art. 153(4) EPC

(43) Date of publication:
**30.04.2008 Bulletin 2008/18**

(21) Application number: **06780677.8**

(22) Date of filing: **30.06.2006**

(51) Int Cl.:
*C09J 7/02* (2006.01)     *B32B 3/26* (2006.01)
*B32B 27/00* (2006.01)

(86) International application number:
**PCT/JP2006/313110**

(87) International publication number:
**WO 2007/015343 (08.02.2007 Gazette 2007/06)**

(84) Designated Contracting States:
**DE FR GB TR**

(30) Priority: **01.08.2005 JP 2005223299**

(71) Applicant: **Lintec Corporation**
**Tokyo 173-0001 (JP)**

(72) Inventors:
• **TOMINO, Tadahiro c/o LINTEC CORPORATION**
**Warabi-shi,**
**Saitama 3350005 (JP)**

• **KATO, Kiichiro c/o LINTEC CORPORATION**
**Warabi-shi,**
**Saitama 3350005 (JP)**

(74) Representative: **Nicholls, Michael John**
**J.A. KEMP & CO.**
**14, South Square**
**Gray's Inn**
**London WC1R 5JJ (GB)**

(54) **ADHESIVE SHEET**

(57)     A pressure sensitive adhesive sheet 1 comprises a base material 11 and a pressure sensitive adhesive layer 12, and has a plurality of through-holes 2 formed therein passing through one face to another face, such that the hole diameter of the through-holes 2 on the surface of the base material 11 is 0.1 to 42 $\mu$m, the outer diameter of a recess 21 at the peripheral edge of the through-holes 2 on the surface of the base material 11 is not greater than 60 $\mu$m, and the modulus of elasticity in tension of the base material 11 is 190 to 600 MPa. The through-holes of the pressure sensitive adhesive sheet 1 allow preventing or eliminating an air trapping and a blister, while the pressure sensitive adhesive sheet 1 exhibits good appearance, with the through-holes being invisible to the naked eye, even when the pressure sensitive adhesive sheet 1 is stretched.

Fig.1

## Description

TECHNICAL FIELD

The present invention relates to a pressure sensitive adhesive sheet that allows preventing or eliminating an air trapping and a blister.

BACKGROUND ART

When a pressure sensitive adhesive sheet is stuck manually onto an adherend, an air trapping may be formed between the adherend and the adhesive face, thereby detracting from the appearance of the pressure sensitive adhesive sheet. Such an air trapping occur easily, in particular, when the surface area of the pressure sensitive adhesive sheet is large.

Also, resin materials such as acrylic resins, ABS resins, polystyrene resins, polycarbonate resins or the like may release gases when heated, or even without heating. When a pressure sensitive adhesive sheet is stuck to an adherend made from such resin materials, the gas released by the adherend may give rise to a blister in the pressure sensitive adhesive sheet.

With a view to solving the above problems, Patent document 1 proposes a pressure sensitive adhesive sheet in which there are formed through-holes having a hole diameter of 0.1 to 300 $\mu$m, to a hole density of 30 to 50,000 holes/ 100 cm$^2$. Such a pressure sensitive adhesive sheet allows preventing an air trapping and a blister in the pressure sensitive adhesive sheet by evacuating air and gas of the adhesive face side towards the pressure sensitive adhesive sheet surface side, via the through-holes.

Patent document 1: International Patent Publication 2004/061031

DISCLOSURE OF THE INVENTION

PROBLEM TO BE SOLVED BY THE INVENTION

Laser hole-forming processing employing a carbon dioxide laser or the like is sometimes used for forming through-holes in the above pressure sensitive adhesive sheet. By way of such laser hole-forming processing, there can be formed, in the pressure sensitive adhesive sheet, through-holes (horizontal cross-sectional shape: substantially circular) that are ordinarily invisible to the naked eye. Depending on the characteristics of the base material, when such a pressure sensitive adhesive sheet is stuck while stretched to, for instance, 5% stretch, the through-holes may be considerably stretched in the stretch direction of the pressure sensitive adhesive sheet, whereby the horizontal cross-sectional shape of the through-holes becomes substantially elliptical, with the through-holes becoming visible to the naked eye.

MEANS FOR SOLVING THE PROBLEM

In light of the above, it is an object of the present invention to provide a pressure sensitive adhesive sheet in which an air trapping and a blister can be prevented by way of through-holes, the pressure sensitive adhesive sheet having further good appearance, with the through-holes being invisible to the naked eye, even when the pressure sensitive adhesive sheet is stretched.

To achieve the above object, the present invention provides a pressure sensitive adhesive sheet comprising a base material and a pressure sensitive adhesive layer, and having a plurality of through-holes formed therein passing through one face to another face, wherein the hole diameter of the through-hole on the surface of the base material is 0.1 to 42 $\mu$m, the outer diameter of a recess at the peripheral edge of the through-hole in the surface of the base material is not greater than 60 $\mu$m, and the modulus of elasticity in tension of the base material is 190 to 600 MPa (Invention 1).

Conceptually, the term "sheet" in the present description includes films, and the term "film" includes sheets. The expression "recess at the peripheral edge of the through-hole" refers to the recess-like deformed portion that is formed at the peripheral edge of a through-hole, on the surface of the base material, depending on the material of the base material or on the hole-forming processing method. The expression "outer diameter of the recess at the peripheral edge of the through-holes is not greater than 60 $\mu$m" includes the case of absence of such a recess.

Through-holes that meet the above conditions are ordinarily invisible to the naked eye on the surface of the pressure sensitive adhesive sheet. Also, a base material meeting the above conditions has adequate softness, such that the horizontal cross-sectional shape of the through-holes is maintained substantially circular, even when the pressure sensitive adhesive sheet is stuck while stretched at an elongation of 5% or less.

Accordingly, this keeps the through-holes invisible to the naked eye on the surface of the pressure sensitive adhesive sheet. That is, a pressure sensitive adhesive sheet according to the above invention (Invention 1) has extremely good appearance, with through-holes invisible to the naked eye even when the pressure sensitive adhesive sheet is stretched.

In the above invention (Invention 1), the coefficient of flexural stress of the base material is preferably $2.0 \times 10^{-4}$ to $1.5 \times 10^{-3}$ (Invention 2). By setting the coefficient of flexural stress of the base material to lie within the above range, the three-dimensional shape of the through-holes is maintained substantially cylindrical, even when the pressure sensitive adhesive sheet is stuck while stretched at an elongation of 5% or less. Accordingly, this keeps yet more effectively the through-holes from being visible to the naked eye on the surface of the pressure sensitive adhesive sheet.

In the above inventions (Inventions 1, 2), preferably, the through-holes are formed by laser thermal processing (Invention 3).

In the above inventions (Inventions 1 to 3), preferably, the hole diameter of the through-holes decreases gradually from an adhesive face of the pressure sensitive adhesive layer to the surface of the base material (Invention 4).

The above invention (Invention 4) makes it more difficult for a recess to form at the peripheral edge of the through-holes on the pressure sensitive adhesive sheet surface, which reduces the likelihood of the through-holes being visible. Also, when a liquid such as water, gasoline or the like comes into contact with the pressure sensitive adhesive sheet after sticking thereof onto an adherend, it is prevented that deterioration of the appearance of the pressure sensitive adhesive sheet due to swelling of the through-hole portions (through-hole periphery) caused by intrusion of liquid into the through-holes.

ADVANTAGEOUS EFFECT OF THE INVENTION

The pressure sensitive adhesive sheet according to the present invention allows preventing or eliminating an air trapping and a blister, by way of through-holes, while extremely excellently preserving an appearance of the pressure sensitive adhesive sheet, with the through-holes being invisible to the naked eye even when the pressure sensitive adhesive sheet is stretched.

BRIEF DESCRIPTION OF THE DRAWINGS

Fig. 1 is a cross-sectional diagram of a pressure sensitive adhesive sheet according to an embodiment of the present invention;
Fig. 2 is a partial enlarged cross-sectional diagram of through-holes in the pressure sensitive adhesive sheet; and
Fig. 3 is a cross-sectional diagram illustrating an example of a manufacturing method of a pressure sensitive adhesive sheet according to an embodiment of the present invention.

DESCRIPTION OF THE REFERENCE NUMERALS

1     pressure sensitive adhesive sheet

11     base material

12     pressure sensitive adhesive layer

13     release liner

1A     pressure sensitive adhesive sheet surface

1B     adhesive face

2     through-hole

21     recess

BEST MODE FOR CARRYING OUT THE INVENTION

Embodiments of the present invention are explained below.

[ADHESIVE SHEET]

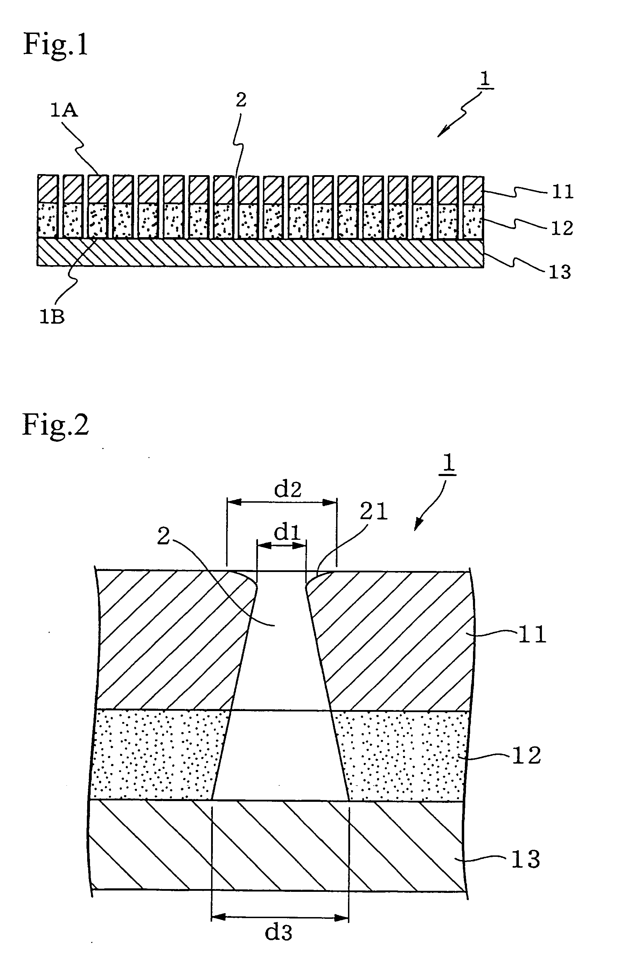

Figs. 1 and 2 are cross-sectional diagrams of a pressure sensitive adhesive sheet according to an embodiment of the present invention.

As illustrated in Figs. 1 and 2, a pressure sensitive adhesive sheet 1 according to the present embodiment is obtained by laminating a base material 11, a pressure sensitive adhesive layer 12 and a release liner 13. The release liner 13 is peeled off when the pressure sensitive adhesive sheet 1 is used.

In the pressure sensitive adhesive sheet 1 there are formed a plurality of through-holes 2 passing through the base material 11 and the pressure sensitive adhesive layer 12, from a pressure sensitive adhesive sheet surface 1A to an adhesive face 1B. During use of the pressure sensitive adhesive sheet 1, air trapped between the adhesive face 1B of the pressure sensitive adhesive layer 12 and the adherend, or gas generated by the adherend, are evacuated via the through-holes 2 out of the pressure sensitive adhesive sheet surface 1A, whereby an air trapping and a blister can be prevented or eliminated, as described below.

In the present embodiment, a hole diameter $d_1$ of the through-holes 2 on the surface of the base material 11 is of 0.1 to 42 $\mu$m, preferably of 1 to 40 $\mu$m. Depending on the material of the base material 11 or the hole-forming processing method, there may be formed a recess 21 at the peripheral edge of the through-holes 2 on the surface of the base material 11, as illustrated in Fig. 2. In that case, an outer diameter $d_2$ of the recess 21 at the peripheral edge of the through-holes 2 on the surface of the base material 11 is not greater than 60 $\mu$m, preferably, not greater than 55 $\mu$m. The depth of the recess 21 at the peripheral edge of the through-holes 2 is ordinarily not greater than 5 $\mu$m, preferably, not greater than 3 $\mu$m.

Air or gas can be evacuated easily via the through-holes 2 when the hole diameter $d_1$ of the through-holes 2 satisfies the above lower-limit conditions. Also, the through-holes 2 become invisible to the naked eye on the pressure sensitive adhesive sheet surface 1A when the hole diameter $d_1$ of the through-holes 2 and the outer diameter $d_2$ of the recess 21 at the peripheral edge of the through-holes 2 satisfy the above upper limit conditions.

To achieve the above effect, a hole diameter $d_3$ of the through-holes 2 on the adhesive face 1B is preferably of 0.1 to 82 $\mu$m, more preferably, in particular, of 1 to 80 $\mu$m.

The hole diameter of the through-holes 2 may be constant in the thickness direction of the pressure sensitive adhesive sheet 1, or may vary in the thickness direction of the pressure sensitive adhesive sheet 1. When the hole diameter of the through-holes 2 varies in the thickness direction of the pressure sensitive adhesive sheet 1, preferably as shown in Fig. 2, the hole diameter of the through-holes 2 decreases gradually from the adhesive face 1B to the surface of the base material 11, without halfway bulges. Varying thus the hole diameter of the through-holes 2 makes it more difficult for the recess 21 to form at the peripheral edge of the through-holes 2, reducing the likelihood of the through-holes 2 being visible on the pressure sensitive adhesive sheet surface 1A. Also, when a liquid such as water, gasoline or the like comes into contact with the pressure sensitive adhesive sheet 1 after sticking thereof onto an adherend, thus preventing deterioration of the appearance of the pressure sensitive adhesive sheet 1 due to swelling of the through-hole portions (through-hole periphery) caused by intrusion of liquid into the through-holes.

The hole density of the through-holes 2 is preferably 30 to 50, 000 holes/100 cm$^2$, more preferably, 100 to 10, 000 holes/100 cm$^2$. When the hole density of the through-holes 2 is less than 30 holes/100 cm$^2$, air or gas may be more difficult to evacuate, while when the hole density of the through-holes 2 is more than 50,000 holes/100 cm$^2$, the mechanical strength of the pressure sensitive adhesive sheet 1 may be impaired.

The through-holes 2 in the pressure sensitive adhesive sheet 1 according to the present embodiment pass only through the base material 11 and the pressure sensitive adhesive layer 12, but may also run through the release liner 13 as well.

The modulus of elasticity in tension of the base material 11 must be of 190 to 600 MPa. When the modulus of elasticity in tension of the base material 11 is not greater than 600 MPa, the base material 11 has adequate softness, such that the horizontal cross-sectional shape of the through-holes 2 is maintained substantially circular, even when the pressure sensitive adhesive sheet 1 is stuck while stretched at an elongation of 5% or less. The through-holes 2 are kept thereby invisible to the naked eye on the pressure sensitive adhesive sheet surface 1A. On the other hand, when the modulus of elasticity in tension of the base material 11 is less than 190 MPa, the base material 11 is apt to twist during the hole-forming processing, whereby the horizontal cross section of the through-holes 2 may fail to achieve a substantially circular shape, with the through-holes 2 becoming visible to the naked eye on the pressure sensitive adhesive sheet surface 1A.

The modulus of elasticity in tension is measured according to JIS K7161 and JIS K7127, with a specimen (type 2) width of 15 mm, a primary distance between grips of 100 mm, and a test speed of 200 mm/min.

The coefficient of flexural stress of the base material 11 is, preferably, of $2.0 \times 10^{-4}$ to $1.5 \times 10^{-3}$, more preferably, in particular of $2.1 \times 10^{-4}$ to $1.3 \times 10^{-3}$. The coefficient of flexural stress, which is the modulus of elasticity in tension times the cube of the thickness, is a numerical value that represents three-dimensionally the stress to which the through-holes 2 are subjected, and hence the coefficient of flexural stress can effectively define the degree to which the through-holes 2 deform in three dimensions when the pressure sensitive adhesive sheet 1 is stretched. That is, by setting the coefficient of flexural stress of the base material 11 to lie within the above range, the three-dimensional shape of the through-holes 2 is maintained substantially cylindrical, even when the pressure sensitive adhesive sheet 1 is stuck while stretched at an elongation of 5% or less. Accordingly, this keeps yet more effectively the through-holes 2 from being visible to the naked eye on the pressure sensitive adhesive sheet surface 1A. Such specification of the coefficient of flexural stress of the base material 11 is particularly effective when the modulus of elasticity in tension of the base material 11 is 190 MPa or higher but lower than 200 MPa.

Although the (hole diameters of the) through-holes 2 stretch also when the pressure sensitive adhesive sheet 1 is stretched, the hole diameter elongation of the through-holes on the surface of the base material 11, represented by the formula below, is preferably not greater than 21%. The through-holes 2 can be reliably kept thereby from being visible to the naked eye. Through-hole diameter elongation ={(hole diameter after stretching - no-stretch hole diameter) / no-stretch hole diameter}×100

Examples of materials of the base material 11 having such a modulus of elasticity in tension include, for instance, resin films such as films comprising resins such as polyester, polyurethane, polystyrene, ethylene-methacrylic acid copolymers, polyvinyl chloride, acrylic resins, polyester-based thermoplastic elastomers, polystyrene-based thermoplastic elastomers, polyurethane-based thermoplastic elastomers and the like, foamed films, or laminated films of the foregoing.

The above resin films may comprise various additives such as inorganic fillers, organic fillers, UV absorbents and the like. The above resin films may be formed through casting or the like using a process material. Provided that the modulus of elasticity in tension of the base material 11 lies within the above range, on the surface of the above resin film there may be formed, for instance, a decorative layer provided through printing, coating application, transfer from a transfer sheet, vapor deposition, sputtering or the like, a prime coat for forming such a decorative layer, a coat layer such as a gloss adjustment coat or the like, or a coat layer such as a hard coat, an antifouling coat, a coat for adjusting surface roughness and mirror surface glossiness, or a coat for imparting weatherability. Such decorative layer or coat layer may be formed over the entire surface of the material, or over part thereof.

When the base material 11 satisfies the conditions below the through-holes 2 become invisible to the naked eye on the pressure sensitive adhesive sheet surface 1A, while affording a more superior appearance of the pressure sensitive adhesive sheet 1.

(1) The surface roughness (Ra) is 0.03 μm or higher, preferably 0.1 μm or higher, and more preferably, in particular, 0.14 μm or higher.
(2) For a chroma (C*) of 60 or less in the L*a*b* color system, the lightness (L*) is 60 or less, preferably 55 or less, while when the chroma (C*) is more than 60, the lightness (L*) is 85 or less, preferably 80 or less.
(3) The contrast ratio is 90% or more, preferably 95% or more.

The surface roughness (Ra: arithmetic average roughness) conforms to JIS B0601. L*, a*, b* and C*, conform to JIS Z8729, wherein the relationship between C*, and a* and b* is expressed by $C*= (a*2+b*2)^{1/2}$. The contrast ratio conforms to JIS K5400.

The thickness of the base material 11 is ordinarily of 1 to 500 μm, preferably of about 3 to 300 μm, but may be arbitrarily modified in accordance with the use of the pressure sensitive adhesive sheet 1. For instance, the pressure sensitive adhesive sheet 1 according to the present embodiment is ideally used as a masking sheet or the like for sticking onto automobile door sashes and the like. In that case, the thickness of the base material 11 is preferably of 80 to 150 μm. A thickness of the base material 11 within such a range affords easy handling of the pressure sensitive adhesive sheet 1, and allows sticking using a jig.

Kinds of the pressure sensitive adhesive for the pressure sensitive adhesive layer 12 are not particularly limited as far as the through hole 2 as described above can be formed in the pressure sensitive adhesive layer 12. The pressure sensitive adhesive can be any of acrylic type, polyester type, polyurethane type, rubber type, silicone type or the like. In addition, the pressure sensitive adhesive can be any of emulsion type, solvent type or solvent-free type, and also can be either crosslinking type or non-crosslinking type.

The thickness of the pressure sensitive adhesive layer 12 is ordinarily of 1 to 300 μm, preferably of about 5 to 100 μm, but may vary arbitrarily depending on the use of the pressure sensitive adhesive sheet 1.

The materials of the release liner 13 are not particularly limited. For example, resin films of polyethylene terephthalate, polypropylene, polyethylene or the like or foaming films thereof or paper such as glassine paper, coated paper, laminated paper or the like which has been subjected to release treating using silicone type, fluorine type or carbamate including long-chain alkyl group type release agents can be used.

The thickness of the release liner 13 is ordinarily of about 10 to 250 μm, preferably of about 20 to 200 μm. The thickness of the release agent in the release liner 13 is ordinarily of 0.05 to 5 μm, preferably of 0.1 to 3 μm.

The pressure sensitive adhesive sheet 1 according to the present embodiment comprises the release liner 13, but the present invention is not limited thereto, and the release liner 13 may be omitted. Also, the size, shape and so forth of the pressure sensitive adhesive sheet 1 according to the present embodiment is not particularly limited in any way. For instance, the pressure sensitive adhesive sheet 1 may be a tape-like sheet (pressure sensitive adhesive tape), comprising only the base material 11 and the pressure sensitive adhesive layer 12, wound up in the shape of a roll.

[MANUFACTURE OF THE ADHESIVE SHEET]

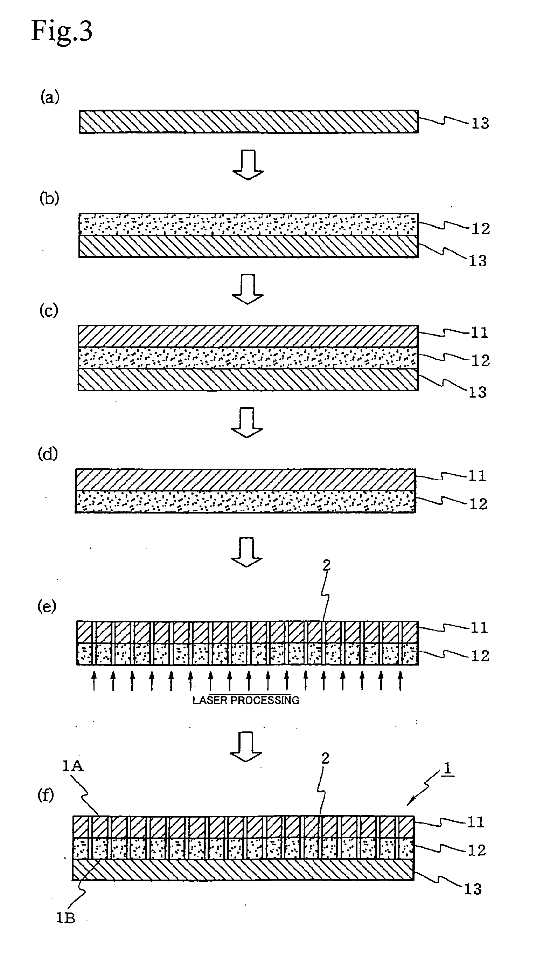

An example of the manufacture of the pressure sensitive adhesive sheet 1 according to the present embodiment is explained next with reference to Fig. 3(a) to (f).

In the present manufacturing method, firstly the pressure sensitive adhesive layer 12 is formed on the release-treated surface of the release liner 13, as illustrated in Figs. 3(a) to (b). For forming the pressure sensitive adhesive layer 12 there is prepared a coating agent containing the pressure sensitive adhesive which constitutes the pressure sensitive adhesive layer 12 and a solvent, as desired; then the coating agent may be applied to the release-treated surface of the release liner 13, using coating equipment such as a roller coater, a knife coater, a roll-knife coater, a die coater, a bar coater, a gravure coater, a curtain coater or the like, followed by drying.

Next, as illustrated in Fig. 3(c), the base material 11 is press-bonded to the surface of the pressure sensitive adhesive layer 12, to yield a laminate comprising the base material 11, the pressure sensitive adhesive layer 12 and the release liner 13. Then, the release liner 13 is peeled off from the pressure sensitive adhesive layer 12, as illustrated in Fig. 3(d), after which through-holes 2 are formed on the laminate comprising the base material 11 and the pressure sensitive adhesive layer 12, as illustrated in Fig. 3(e). The release liner 13 is then stuck again onto the pressure sensitive adhesive layer 12, as illustrated in Fig. 3(f).

The method for forming the through-holes 2 may involve, for instance, laser processing, hot needle punching, fusing perforation, water jetting, micro-drilling, precision pressing and the like. Preferred amongst these is laser processing as it allows forming easily minute through-holes of good air-evacuation ability to a desired hole density, in particular, laser thermal processing, which is superior in terms of cost. When the through-holes 2 are formed through laser thermal processing, the visibility of the through-holes 2 may easily become problematic, in particular, upon stretching of the pressure sensitive adhesive sheet 1. In the present pressure sensitive adhesive sheet 1, however, the through-holes 2 are kept invisible to the naked eye on the pressure sensitive adhesive sheet surface 1A even when the pressure sensitive adhesive sheet 1 is stuck while stretched at an elongation of 5% or less, as described above.

The laser used for laser thermal processing may be a carbon dioxide ($CO_2$) laser, a TEA-$CO_2$ laser, a YAG laser, a UV-YAG laser, an $YVO_4$ laser, an YLF laser or the like, preferably a carbon dioxide laser. Carbon dioxide lasers yield substantial outputs, accommodate a broad range of irradiation conditions (adjustment range) for forming through-holes of good shape, and are superior also in terms of mass-production and cost performance.

A laser hole-forming processing process may involve a burst process (burst mode) in which laser beam is continuously irradiated onto one point until formation of one through-hole 2, or a cycle process (cycle mode) in which a plurality of through-holes 2 are formed uniformly by sequentially irradiating laser beam onto a plurality of points. The former process is superior as regards thermal efficiency, while the latter is better at reducing thermal impact on the object to be processed. In the above laser thermal processing, though, either process may be used.

When carrying out laser thermal processing, laser beam is preferably directly irradiated onto the pressure sensitive adhesive layer 12 from the pressure sensitive adhesive layer 12 side. Performing laser thermal processing thus from the pressure sensitive adhesive layer 12 side allows achieving through-holes 2, even tapered, having a smaller hole diameter on the base material 11 side than on the pressure sensitive adhesive layer 12 side.

Also, directly irradiating laser beam onto the pressure sensitive adhesive layer 12, once the release liner 13 is peeled off, precludes widening of the opening of the through-holes 2 of the pressure sensitive adhesive layer 12 owing to thermal melted matter of the release liner 13, and allows hence forming through-holes 2 having high-precision hole diameters and hole densities, and into which water or the like, which might affect negatively the pressure sensitive adhesive sheet 1, can penetrate only with difficulty. Moreover, having no release liner 13 interposed during irradiation of laser beam onto the pressure sensitive adhesive layer 12 allows shortening the laser beam irradiation time, or reducing the output energy of the laser. Reducing the output energy of the laser diminishes in turn the thermal impact on the pressure sensitive adhesive layer 12 and the base material 11, and allows forming neatly shaped through-holes 2 with little melted matter (dross) and few thermally deformed portions resulting from the heat of the laser beam.

When as the base material 11 there is used a base material formed through casting or the like using a process material, laser thermal processing may be carried out with the process material laminated onto the surface of the base material 11. Prior to laser thermal processing, a removal protective sheet may also be laminated, at an arbitrary stage, onto the surface of the base material 11 (base material without process material laminated thereon). As the protective sheet there may be used, for instance, a conventionally known protective sheet obtained by laminating a removal pressure sensitive adhesive layer onto a base material comprising a known resin film or the like.

When the through-holes 2 are formed through laser thermal processing, melted matter may be attached to the peripheral edge of the openings of the through-holes 2; herein, however, the presence of a process material or a protective sheet on the surface of the base material 11 causes the melted matter to be attached to the process material or to the protective film, and not to the base material 11. This allows, as a result, securing a more better appearance of the pressure sensitive adhesive sheet 1.

In the above manufacturing method, the pressure sensitive adhesive layer 12 is formed on the release liner 13, and then the formed pressure sensitive adhesive layer 12 and the base material 11 are superposed together. However, the present invention is not limited thereto, and the pressure sensitive adhesive layer 12 may be formed directly on the base material 11. The laser processing may also be applied to the form of a laminate in which the release liner 13 is laminated, and laser beam may be irradiated also from the base material 11 side.

[USE OF THE ADHESIVE SHEET]

For sticking the pressure sensitive adhesive sheet 1 to the adherend, firstly the release liner 13 is peeled off from the pressure sensitive adhesive layer 12.

Next, the adhesive face 1B of the exposed pressure sensitive adhesive layer 12 is brought into close contact with the adherend, and the pressure sensitive adhesive sheet 1 is pressed against the adherend. The pressure sensitive adhesive sheet 1 can be stuck while stretched to an elongation of 5% or less. Herein, the air between the adhesive face 1B of the pressure sensitive adhesive layer 12 and the adherend is evacuated out of the base material surface 1A via the through-holes 2 formed in the pressure sensitive adhesive sheet 1, thereby making entrapment of air between the adhesive face 1B and the adherend less likely, and preventing hence the formation of an air trapping. Even if an air trapping forms as a result of air becoming trapped, such an air trapping is eliminated by re-pressing the air trapping portions or air trapping peripheral portions that encompass the air trapping portions, thereby evacuating the air, via the through-holes 2, out of the base material surface 1A. Such removal of an air trapping is also possible long after the pressure sensitive adhesive sheet 1 has been stuck.

Even if the adherend releases a gas after sticking of the pressure sensitive adhesive sheet 1 to the adherend, such a gas can be evacuated out of the base material surface 1A via the through-holes 2 formed in the pressure sensitive adhesive sheet 1, thus preventing the formation of a blister in the pressure sensitive adhesive sheet 1.

The appearance of the pressure sensitive adhesive sheet 1 is extremely good since the through-holes 2 on the pressure sensitive adhesive sheet surface 1A are invisible to the naked eye even when the pressure sensitive adhesive sheet 1 is stuck while stretched to an elongation of 5% or less.

EXAMPLES

The present invention is explained in detail below based on examples. However, the invention is in no way meant to be limited to or by the examples.

[Example 1]

A coating agent of an acrylic based solvent-type pressure sensitive adhesive (PK, manufactured by LINTEC CORPORATION) was applied with a knife coater, to a thickness after drying of 30 $\mu$m, onto the release-treated surface of a release liner (FPM-11, thickness: 175 $\mu$m, manufactured by Lintec Co.) obtained by laminating a polyethylene resin onto both faces of wood free paper followed by a release treatment of one face with a silicone release agent. The whole was then dried at 90°C over 1 minute. A resin film (ES9210BK, thickness: 100 $\mu$m, manufactured by Kurabo Industries Ltd.) comprising a polyester-based thermoplastic elastomer was press-bonded, as the base material, to the pressure sensitive adhesive layer formed as described above. Onto the surface of the base material there was stuck also a protective sheet (E-2035, thickness: 60 $\mu$m, manufactured by Sumilon Co.) having a removable pressure sensitive adhesive layer, to yield a 4-layer laminate.

The release liner was peeled off from the above laminate, and then through-holes were formed to a hole density of 2,500 holes/100 cm$^2$ by irradiation of a carbon dioxide laser onto the laminate, from the side of the pressure sensitive adhesive layer (laser used: YB-HCS03, manufactured by Matsushita Industrial Equipment Co., Ltd, frequency: 3000 Hz, two-shot (1st shot: 50 $\mu$sec, 2nd shot: 40 $\mu$sec), burst process). Next, the above release liner was press-bonded again onto the pressure sensitive adhesive layer and the protective sheet was peeled off from the base material surface, to yield the pressure sensitive adhesive sheet.

[Example 2]

A pressure sensitive adhesive sheet was prepared in the same way as in Example 1, but using herein a resin film comprising a polyester-based thermoplastic elastomer (ES9300BK, thickness: 100$\mu$m, manufactured by Kurabo

Industries Ltd.), as the basematerial .

[Example 3]

A pressure sensitive adhesive sheet was prepared in the same way as in Example 1, but using herein a resin film comprising a polyester-based thermoplastic elastomer (ES9400BK, thickness: 100 $\mu$m, manufacturedbyKurabo Industries Ltd.), as the basematerial .

[Example 4]

A pressure sensitive adhesive sheet was prepared in the same way as in Example 1, but using herein a resin film comprising polyurethane (B(41)C-M, thickness: 100 $\mu$m, manufactured by Nippon Carbide Industries Co., Inc.), as the base material.

[Example 5]

A pressure sensitive adhesive sheet was prepared in the same way as in Example 1, but using herein a resin film comprising polyurethane (B88-A, thickness: 150 $\mu$m, manufactured by Nippon Carbide Industries Co., Inc.), as the base material, and by setting the first-shot irradiation conditions to 75 $\mu$sec, and the second-shot irradiation conditions to 60 $\mu$sec, in the carbon dioxide laser.

[Example 6]

A pressure sensitive adhesive sheet was prepared in the same way as in Example 1, but using herein a resin film comprising polyurethane (B704, thickness: 90 $\mu$m, manufactured by Nippon Carbide Industries Co., Inc.), as the base material, and by setting the second-shot irradiation conditions to 32 $\mu$sec, in the carbon dioxide laser.

[Example 7]

A pressure sensitive adhesive sheet was prepared in the same way as in Example 1, but using herein a resin film comprising polyurethane (B518, thickness: 140 $\mu$m, manufactured by Nippon Carbide Industries Co., Inc.), as the base material, and by setting the second-shot irradiation conditions to 32 $\mu$sec, in the carbon dioxide laser.

[Comparative example 1]

A pressure sensitive adhesive sheet was prepared in the same way as in Example 1, but using herein a resin film comprising a polyester-based thermoplastic elastomer (ES4160BK, thickness: 100 $\mu$m, manufacturedbyKurabo Industries Ltd.), as the base material.

[Comparative example 2]

A pressure sensitive adhesive sheet was prepared in the same way as in Example 1, but using herein a resin film comprising a polyester-based thermoplastic elastomer (ES4470BK, thickness: 100$\mu$m, manufacturedbyKurabo Industries Ltd.), as the base material.

[Comparative example 3]

A pressure sensitive adhesive sheet was prepared in the same way as in Example 1, but using herein a resin film comprising polyurethane (FT80-100BK, thickness: 100 $\mu$m, manufactured by Seikoh Chemicals Co., Ltd.), as the base material, and by setting the second-shot irradiation conditions to 20 $\mu$sec, in the carbon dioxide laser.

[Comparative example 4]

A pressure sensitive adhesive sheet was prepared in the same way as in Example 1, but using herein a resin film comprising polyvinyl chloride (Fujipaint 83448 M2 (30), thickness: 100 $\mu$m, manufactured by Nippon Carbide Industries Co., Inc.), as the base material.

[Test example]

The modulus of elasticity in tension of the base materials used in the Examples and the Comparative examples were measured in accordance with JIS K7161 and JIS K7127, under the conditions below. The coefficient of flexural stress of the each base materials were calculated on the basis of the formula

$$\text{Coefficient of flexural stress} = (\text{Modulus of elasticity in tension}) \times (\text{Thickness})^3.$$

The results are given in Table 1.

- Measurement equipment: Orientec Co. Ltd., TENSILON RTA-100
- Width of the test piece (type 2): 15 mm
- Initial distance between chucks: 100 mm
- Test speed: 200 mm/min

The surface roughness (Ra), chroma (C*), lightness (L*) and contrast ratio of the base materials used in the Examples and Comparative examples were also measured. Surface roughness (Ra) was measured in accordance with JIS B0601, using SV-3000S4, manufactured by Mitutoyo Corporation, as the measurement equipment, with a cutoff value λc=0.8mm and an evaluation length ln=10mm. Chroma (C*) and lightness (L*) were measured in accordance with JIS Z8729, on the basis of a reflection mode, using a simultaneous measurement-type spectro-photometric color difference meter (SQ-2000, by Nippon Denshoku Co. , Ltd) as the measurement apparatus, a white plate (L*=92.47, a*=0.61, b*=2.90) as a sample support plate, and an illuminant C/2 deg as a light source. The contrast ratio was measured in accordance with JIS K5400, using a SPECTRAFLASH SF600 PLUS CTC (spectrophotometer) from datacolor international (DCI) as the measurement apparatus. The results are given in Table 3.

The hole diameter of the through-holes on the base material surface, the outer diameter and depth of the a recess at the peripheral edge of the through-holes, as well as the hole diameter on the adhesive face of the pressure sensitive adhesive sheets obtained in the Examples and Comparative examples were measured using a scanning electron microscope (S-2360N model, manufactured by Hitachi, Ltd.). Also, the pressure sensitive adhesive sheets obtained in the Examples and Comparative examples were stretched by 5%, and then the hole diameter of the through-holes on the base material surface, the outer diameter and depth of the a recess at the peripheral edge of the through-holes, as well as the hole diameter on the adhesive face were measured in the same way as above. The elongation of the hole diameter of the through-holes on the base material surface was then calculated on the basis of the obtained results. The results are given in Table 2.

An air trapping elimination test and hole visibility inspection (without stretching/with stretching) were carried out, as described below, on the pressure sensitive adhesive sheets obtained in the Examples and Comparative examples. The results are given in Table 3.

Air trapping elimination test: The pressure sensitive adhesive sheet (size: 50 mm × 50 mm), having the release liner peeled off therefrom, was stuck to a 70 mm × 70 mm melamine-coated plate having a partially spherical depression of 15 mm diameter and 1 mm maximum depth (giving rise to an air trapping between the depressions and the pressure sensitive adhesive sheet). The pressure sensitive adhesive sheet was press-bonded using a squeegee, and then it was checked whether the air trapping could be removed or not. In the results, O denotes cases in which an air trapping was eliminated as the pressure sensitive adhesive sheet followed the depressions of the melamine-coated plate, while × denotes cases in which an air trapping failed to be eliminated as the pressure sensitive adhesive sheet failed to follow the depressions of the melamine-coated plate (including samples with residual an air trapping however small).

Hole visibility inspection: The pressure sensitive adhesive sheet (size: 25 mm × 100 mm), having the release liner stripped therefrom, was stuck to a white melamine-coated plate, and then the visibility of through-holes on the pressure sensitive adhesive sheet surface was inspected with the naked eye under the light of an indoor fluorescent lamp. Similarly, the pressure sensitive adhesive sheet (size of the inspection portion: 25 mm × 100mm), having the release liner stripped therefrom, wasuniaxially stretched by 5%, to 105 mm from 100 mm, in the longitudinal direction, and was then stuck in that stretched state onto a white melamine-coated plate. The same inspection as described above was then conducted thereon. The pressure sensitive adhesive sheet was observed under various angles with a distance from the eyes to the pressure sensitive adhesive sheet of about 30 cm. In the results, O denotes cases where the through-holes were invisible, and × cases where the through-holes were visible.

Table 1

| | Modulus of elasticity in tension (MPa) | Base material thickness ($\mu$m) | Coefficient of flexural stress |
|---|---|---|---|
| Example 1 | 215 | 100 | $2.15 \times 10^{-4}$ |
| Example 2 | 358 | 100 | $3.58 \times 10^{-4}$ |
| Example 3 | 505 | 100 | $5.05 \times 10^{-4}$ |
| Example 4 | 432 | 100 | $4.32 \times 10^{-4}$ |
| Example 5 | 190 | 150 | $6.41 \times 10^{-4}$ |
| Example 6 | 380 | 90 | $2.77 \times 10^{-4}$ |
| Example 7 | 470 | 140 | $1.29 \times 10^{-3}$ |
| Comparative example 1 | 667 | 100 | $6.67 \times 10^{-4}$ |
| Comparative example 2 | 938 | 100 | $9.38 \times 10^{-4}$ |
| Comparative example 3 | 184 | 100 | $1.84 \times 10^{-4}$ |
| Comparative example 4 | 750 | 100 | $7.50 \times 10^{-4}$ |

Table 2

| | Through-hole before stretching | | | | Through-hole after stretching | | | | Through-hole diameter elongation (%) |
|---|---|---|---|---|---|---|---|---|---|
| | Hole diameter on base material surface ($\mu$m) | Recess outer diameter ($\mu$m) | Recess depth ($\mu$m) | Hole diameter on adhesive face ($\mu$m) | Hole diameter on base material surface ($\mu$m) | Recess outer diameter ($\mu$m) | Recess depth ($\mu$m) | Hole diameter on adhesive face ($\mu$m) | |
| Example 1 | 31.9 | 31.9(*) | 0 | 60.9 | 36.1 | 44.7 | 0.8 | 63.1 | 13.2 |
| Example 2 | 33.4 | 48.6 | 1.2 | 63.3 | 37.1 | 53.8 | 1.4 | 65.4 | 10.9 |
| Example 3 | 32.2 | 47.8 | 1.8 | 62.3 | 38.7 | 54.3 | 1.9 | 64.6 | 20.3 |
| Example 4 | 31.7 | 45.3 | 1.5 | 60.6 | 34.7 | 50.2 | 1.7 | 65.7 | 9.7 |
| Example 5 | 30.6 | 45.3 | 1.1 | 62.0 | 34.4 | 52.4 | 1.2 | 63.2 | 12.4 |
| Example 6 | 31.5 | 46.4 | 1.4 | 63.2 | 34.0 | 52.6 | 1.4 | 64.6 | 8.0 |
| Example 7 | 30.8 | 45.9 | 0.9 | 61.8 | 33.9 | 51.9 | 1.0 | 64.5 | 10.1 |
| Comparative example 1 | 30.7 | 46.2 | 2.0 | 62.9 | 41.8 | 65.1 | 2.2 | 68.2 | 36.0 |
| Comparative example 2 | 31.6 | 47.8 | 1.9 | 65.2 | 41.4 | 64.5 | 2.0 | 69.2 | 31.1 |
| Comparative example 3 | 35.5 | 49.7 | 1.8 | 63.2 | 44.3 | 59.6 | 2.8 | 67.3 | 24.7 |
| Comparative example 4 | 28.3 | 28.3(*) | 0 | 63.2 | 33.8 | 60.3 | 1.0 | 68.2 | 22.7 |
| (*) No recess | | | | | | | | | |

EP 1 916 284 A1

Table 3

| | Surface roughness (Ra) | Chroma (C*) | Lightness (L*) | Contrast ratio (%) | Air trapping Elimination test | Hole visibility test | |
|---|---|---|---|---|---|---|---|
| | | | | | | No stretch | 5% stretch |
| Example 1 | 0.374 | 38.13 | 26.76 | 98.7 | O | O | O |
| Example 2 | 0.388 | 32.85 | 27.30 | 98.4 | O | O | O |
| Example 3 | 0.399 | 37.34 | 27.63 | 98.5 | O | O | O |
| Example 4 | 0.246 | 40.02 | 26.43 | 100 | O | O | O |
| Example 5 | 0.262 | 36.23 | 27.01 | 98.6 | O | O | O |
| Example 6 | 0.273 | 39.01 | 26.22 | 98.5 | O | O | O |
| Example 7 | 0.390 | 38.25 | 26.50 | 99.0 | O | O | O |
| Comparative example 1 | 0.304 | 31.34 | 25.67 | 96.3 | O | O | × |
| Comparative example 2 | 0.341 | 35.48 | 26.23 | 95.9 | O | O | × |
| Comparative example 3 | 0.017 | 41.89 | 25.57 | 98.3 | O | O | × |
| Comparative example 4 | 0.266 | 33.93 | 26.56 | 99.9 | O | O | × |

As tables 1 to 3 indicate, the pressure sensitive adhesive sheets (Examples 1 to 7) using a base material conforming to the conditions of the present invention exhibited superior air evacuation ability and extremely good appearance, with through-holes invisible to the naked eye both for non-stretched and stretched pressure sensitive adhesive sheets.

INDUSTRIAL APPLICABILITY

The pressure sensitive adhesive sheet of the present invention can be preferably used in cases where through-holes are needed to be invisible after stretching and sticking of the pressure sensitive adhesive sheet, and in cases where an air trapping and a blister are generally prone to occur in the pressure sensitive adhesive sheet.

**Claims**

1. A pressure sensitive adhesive sheet comprising a base material and a pressure sensitive adhesive layer and having a plurality of through-holes formed therein passing through one face to another face,
   wherein the hole diameter of said through-hole on the surface of said base material is 0.1 to 42 $\mu$m,
   the outer diameter of a recess at the peripheral edge of said through-hole on the surface of said base material is not greater than 60 $\mu$m,
   and the modulus of elasticity in tension of said base material is 190 to 600 MPa.

2. The pressure sensitive adhesive sheet according to claim 1, wherein the coefficient of flexural stress of said base material is $2.0 \times 10^{-4}$ to $1.5 \times 10^{-3}$.

3. The pressure sensitive adhesive sheet according to claim 1 or 2, wherein said through-holes are formed by laser thermal processing.

4. The pressure sensitive adhesive sheet according to any one of claims 1 to 3, wherein the hole diameter of said through-holes decreases gradually from an adhesive face of said pressure sensitive adhesive layer to the surface of said base material.

Fig.1

Fig.2

# Fig.3

(a)

13

⇩

(b)

12
13

⇩

(c)

11
12
13

⇩

(d)

11
12

⇩

(e)

2

11
12

↑↑↑↑↑↑↑↑↑↑↑↑↑↑↑↑↑↑
LASER PROCESSING

⇩

(f)

1A    2    1

11
12
13

1B

## INTERNATIONAL SEARCH REPORT

| | International application No. |
|---|---|
| | PCT/JP2006/313110 |

**A. CLASSIFICATION OF SUBJECT MATTER**
*C09J7/02*(2006.01)i, *B32B3/26*(2006.01)i, *B32B27/00*(2006.01)i

According to International Patent Classification (IPC) or to both national classification and IPC

**B. FIELDS SEARCHED**

Minimum documentation searched (classification system followed by classification symbols)
C09J7/02, B32B3/26, B32B27/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 59-124974 A (Nitto Electric Industrial Co., Ltd.), 19 July, 1984 (19.07.84), Claim 1, page 2, lower left column, line 15 to lower right column, line 1; lower right column, lines 9 to 16; page 3, upper right column, line 17 to lower left column, line 7 (Family: none) | 1-4 |
| Y | JP 59-54550 A (Nitto Electric Industrial Co., Ltd.), 29 March, 1984 (29.03.84), Claims 1 to 6; page 3, upper right column, line 18 to lower left column, line 8; page 5, upper left column, line 5 to upper right column, line 1 (Family: none) | 1-4 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 August, 2006 (23.08.06) | 05 September, 2006 (05.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

# EP 1 916 284 A1

## INTERNATIONAL SEARCH REPORT

| International application No. |
|---|
| PCT/JP2006/313110 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2004/61031 A1  (Lintec Corp.),<br>22 July, 2004 (22.07.04),<br>Claims 1 to 7; page 11, lines 10 to 13;<br>examples 2 to 3, 8<br>& EP 1577358 A1          & WO 2004/61032 A1<br>& CA 2510054 A          & BR 317736 A | 1-4 |
| A | JP 2002-167558 A  (3M Innovative Properties Co.),<br>11 June, 2002 (11.06.02),<br>Tables 2 to 3<br>(Family: none) | 1-4 |
| A | JP 4-100235 U  (Toyota Auto Body Co., Ltd.),<br>31 August, 1992 (31.08.92),<br>Claims<br>(Family: none) | 1-4 |
| A | JP 2-107682 A  (Nichiban Co., Ltd.),<br>19 April, 1990 (19.04.90),<br>Claims 1 to 7<br>(Family: none) | 1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004061031 A